# EUROPEAN PATENT SPECIFICATION

(11) **EP 3 229 725 B1**
(45) Date of publication and mention of the grant of the patent: **08.03.2023**
(21) Application number: 16741707.0
(22) Date of filing: 12.05.2016
(51) Int. Cl.: A61C 15/00

(54) **AN INTERDENTAL BRUSH WITH A PROTECTIVE TIP**
BÜRSTE FÜR ZAHNZWISCHENRÄUME MIT EINER SCHUTZSPITZE
BROSSE INTERDENTAIRE AVEC UN EMBOUT DE PROTECTION

(30) Priority: 21.05.2015 IN 1436DE2015
(43) Date of publication of application: 18.10.2017
(73) Proprietor: Global Dent Aids PVT. Ltd, Uttar Pradesh Noida 201301 (IN)
(72) Inventor: KALBFELD, Russel, Naperville, Illinois 60565 (US); KHULLER, Vineet, New Delhi 110013 (IN)
(74) Representative: Herrero & Asociados, S.L.
(86) International application number: PCT/IN2016/050138
(87) International publication number: WO 2016/185487

(56) References cited:
- US-A- 5 699 578
- US-A1- 2010 192 320
- US-A1- 2012 060 308

## Description

### TECHNICAL FIELD OF THE INVENTION

The present invention relates generally to an interdental cleaner. More particularly, the present invention relates to a brush for cleaning interdental spaces with a protective tip comprising a ductile cover. The brush provides cleaning of interdental spaces without damaging the gingival tissues.

### BACKGROUND AND THE PRIOR ART

Interdental cleaners are used for cleaning plaque, food debris etc. from spaces between teeth thus reducing tooth decay. Interdental cleaners are brushes wherein the body of the brush is made of twisted wire construction and the twisted wire holds bristles projecting radially from the spine. The body of the brush is connected at one end to the handle of the said cleaner. The said bristles squeeze in the interdental spaces for cleaning between the teeth and provide an overall and holistic cleaning of the hidden oral spaces.

The wire in the interdental brush holding the bristles in the conventional brush may be uncoated or coated. At the tip of the brush the wire is required to fold to hold the filament tightly into the brush forming the bristles of the brush. This fold creates a sharp point. This sharp point may create at various angles of usage an area that can cause pain or sensitivity or in extreme cases even injury to the user as there are high chances of hitting the gum or gingival tissue. This is especially true in cases where the gums are already damaged or diseased. The end of a twisted wire brush where the wire folds over onto itself is also the widest portion of the twisted wire, making it at times difficult to insert the brush in tight interdental spaces. There is a need to overcome the problems of sharp pointed end of the twisted wire holding the bristles in the conventional cleaners and to overcome the problem of inserting the brush into tight spaces.

Further the wire from conventional interdental cleaner may cause a galvanic shock, the painful phenomenon which occurs when two dissimilar metals contact each other in the mouth. In the case of an interdental user, it mostly occurs when the user contacts an amalgam filling or gold filling with the wire from the interdental brush. There is therefore a need to provide an interdental cleaner with an insulator to avoid the two metals touching.

The wire from an interdental cleaner may also cause damage to the post for dental implants. Dental implants require a post that is used as a substitute for the root of the tooth. These posts can be made from titanium, ceramic, stainless steel, or other FDA (Food and Drug Administration) approved materials. It is important to keep these posts clean and often dentists prescribe the use of an interdental brush to help clean around the post. The metal wire in the interdental brush can scratch the post leaving a rough surface, making it easy for debris and bacteria to build.

Also the wire from the interdental brush may cause sensitivity and pain to patients with dental bridges. A dental bridge is made up of two or more crowns for the teeth on either side of the gap (these two or more anchoring teeth are called abutment teeth) or false teeth in between. Dental bridges are supported by natural teeth or implants. People with dental bridges need to clean under the space of the bridge and along the gum-line. The gums can be very sensitive in this area for the patient and can become even more sensitive when coming in contact with the normal wire from an interdental brush. Further interdental brushes are also recommended for patients with orthodontia, to clean between teeth above the bridge wire and under the bridge wire itself. The conventional interdental brush with its hard wire can cause the bridge wire to pull out of the bracket if used too aggressively.

Several interdental cleaners are known in the art. US 3559226 teaches an interdental cleaner that is "L" shaped i.e. the spine with the bristles that is perpendicular to the handle. EP0326677 teaches an interdental cleaning with a twisted wire brush where the wire folds over onto itself and is also the widest portion of the twisted wire. Similarly the wire in the interdental brush holding the bristles in the conventional brush may be uncoated or coated as taught in US4828420. Further examples of interdental cleaners are disclosed in US5699578, US2010192320, US5573020, US7806125, US20070006402, US6325626 and US200902354771 teach interdental brush with a cushioning effect in the body of the brush. However all the known prior art suffer from the wire folding onto itself making it difficult to either insert the brush in tight interdental spaces or creating a sharp point at the tip causing pain or sensitivity or in extreme cases even injury to the user as there are high chances of hitting the gum or gingival tissue. This is especially true in cases where the gums are already damaged or diseased. US 2012/060308 A1 discloses a device for the production of brushes that have a twisted carrier part made from wire sections with a set of bristles and a handle-side and/or a head-side overmolding has an injection molding tool for holding and for the overmolding of the head-side or handle-side end region of a brush pre-form. The tool has a mold part with a passage for the end region. In this way, a mechanism for the attachment or introduction of a sealing element is provided on the carrier part, wherein this sealing element is arranged in the region of the passage for the overmolding and seals this passage.

There is therefore a need for an interdental brush that cleans the tight spaces between the teeth, overcomes the problem of sharp pointed end of the twisted wire, has an insulator to prevent galvanic shock, does not scratch the post of a dental implant, does not cause the wire of the dental bridge to pull out and overcome other cleaning problems related to normal orthodontia without damaging the dental hardware, sensitive tissues or causing galvanic shock thereof.

The present invention overcomes the above said problems associated with the conventional interdental brush and provides a cleaner for interdental cleaning that has a protective cover or insulator over the sharp point of the twisted wire, thus eliminating the risk of pain or injury to the user and unnecessary scratching in the mouth.

### OBJECTS OF THE INVENTION

A basic object of the present invention is to overcome the disadvantages and drawbacks of the known art.

An object of the present invention is to provide an interdental brush with a protective tip.

Another object of the present invention is to provide an interdental brush with a protective tip comprising ductile cover.

Another object of the present invention is to provide an interdental brush with a protective tip that cleans tight spaces between the teeth.

Another object of the present invention is to provide an interdental brush with a protective tip that avoids damage to gingival tissues.

Another object of the present invention is to provide a "lead-in" to easily direct the interdental brush between the teeth.

Another object of the present invention is to provide an interdental brush with a protective tip that gives protection to the user from galvanic shock.

Another object of the present invention is to provide a process of fabricating an interdental brush with a protective tip.

Another object of the invention is to provide a safe method of cleaning around dental implants without causing damage to the implant post.

Another object of the invention is to provide a method to clean under dental bridges and provide a gentler cleaning without adding to the patient's sensitivity.

Another object of the invention is to provide a method for cleaning around orthodontic brackets and under orthodontic bridge wire without affecting the security of the bridge wire and bracket connection.

Yet another object of the present invention is to provide a compact, lightweight and easy to carry interdental brush with a protective tip.

These and other objects of the present invention are achieved in the preferred embodiments disclosed below by providing an interdental brush with a protective tip comprising a ductile cover.

### SUMMARY OF THE INVENTION

According to an embodiment the present invention provides an interdental brush comprising a spine of twisted wire; bristles projecting from the spine of twisted wire; a protective tip at an end of the twisted wire above the said bristles wherein the protective tip comprises a ductile cover enveloping at the end of the twisted wire, molded and attached to the end of the wire and centered around the end of the wire; characterized in that said ductile cover has a plurality of protrusions is dome shaped at a closed end and chamfer shaped at the bristle end. The chamfer shape assists in guiding the tipped end of the brush from out between the teeth as the brush is removed from between the teeth and protects the tip from catching on any of the tooth surfaces.

In an embodiment the protective tip is centered around the end of the twisted wire with a plurality of centering ribs. In another embodiment the protective tip is centered around the end of the twisted wire via a set of pins. In an embodiment the protrusions on the ductile cover are finger like projections.

In another embodiment the invention comprises the process of fabrication of the protective tip comprising the steps of manufacturing the twisted wire brush with a section at the tip of the brush void of any bristles; inserting the twisted wire brush void of bristles at the tip into an injection molding die where the cover is molded over the wire area void of bristles; molding the cover onto the twisted wire brush with a plurality of protrusions. In another embodiment an adhesive is applied at the end of the twisted wire to create an area for bonding the cover more securely during the injection molding process.

In another embodiment a plurality of centering ribs is used to center the protective tip around the end of the twisted wire. In another embodiment a set of pins is used to center the protective tip around the end of the twisted wire.

In an embodiment a loop is created at the fold of the twisted wire creating a passage hole for the material of the protective tip to flow through wherein once the said material cools and hardens it creates a mechanical lock holding the protective tip material to the wire.

An interdental brush wherein the protective tip is coupled to the brush to receive between teeth and interdental portions of gums facilitating cleaning of interdental spaces without damaging the tissue.

### BRIEF DESCRIPTION OF THE ACCOMPNYING DRAWINGS

Some of the objects of the invention have been set forth above. These and other objects, features, aspects and advantages of the present invention will become better understood with regard to the following description, appended claims and accompanying drawings where:
Fig: 1 shows the interdental cleaner comprising the interdental brush and a handle.
Fig. 2 shows the brush portion of the interdental cleaner.
Fig. 3 shows the perspective view of the protective tip of the interdental brush.
Fig. 4 shows the side view of the protective tip of the interdental brush.
Fig. 4A shows the side view of the protective tip with the end of twisted wire folded inside the ductile cover.

### DETAILED DESCRIPTION OF THE INVENTION AND ACCOMPNYING DRAWINGS

The present invention will be described with respect to preferred embodiments but the invention is not limited thereto but only by the claims.

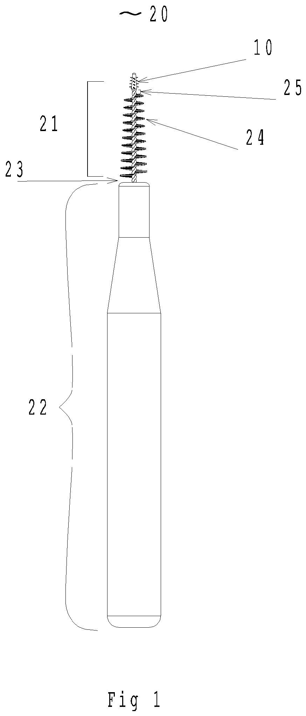

Fig. 1 shows an interdental cleaner 20 with a brush portion 21 comprising the proximal end and a handle 22 comprising the distal end, the two attached through a spine of twisted wire 23 thereto.

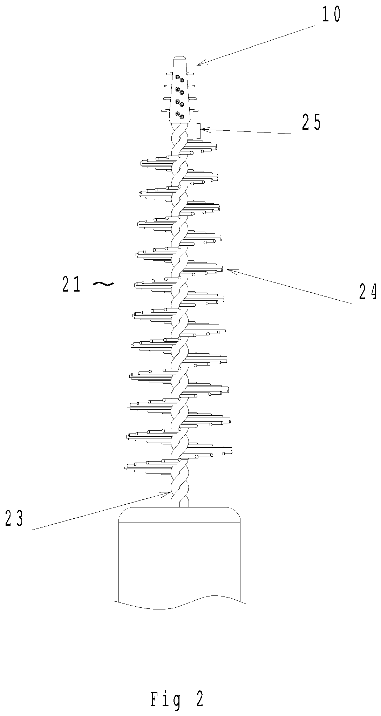

Fig. 2 shows an interdental brush 21 comprising a spine of twisted wire 23, bristles 24 projecting from the spine of twisted wire, a protective tip 10 at the end of the twisted wire 23. A short distance 25 separates the protective tip 10 from the first row of bristles.

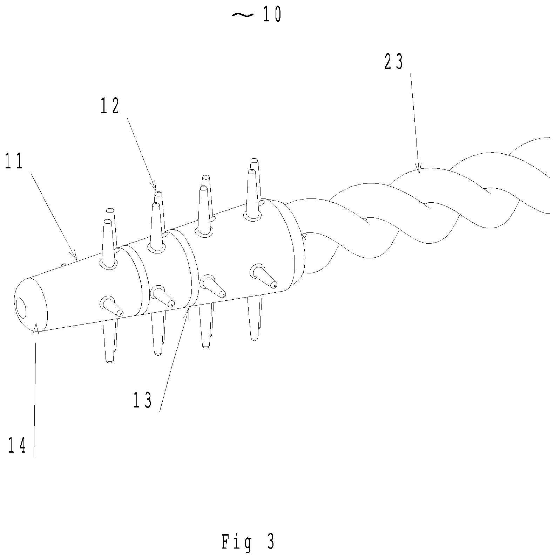

Fig. 3 shows the protective tip 10 of the interdental brush in one embodiment. The tip comprises a ductile cover 11 enveloping the end of the twisted wire, insert injection molded over the end of the twisted wire and centered around the end of the wire. The protective tip 10 is centered around the end of twisted wire with a plurality of centering ribs 13. Alternatively the protective tip is centered around the end of the twisted wire via a set of pins. The centering ribs or the pins hold the wire in place during the injection molding process. The ductile cover includes a series of plurality of protrusions 12 made of an elastomeric material formed in the injection molding process. The protrusions can have any shape. In the embodiment shown in Fig. 3 the protrusions are finger like projections. The protrusions are flexible and facilitate improved cleaning of interdental spaces, since this increases the surface area and aids in drawing out the plaque and other undesirable material or bacteria from the narrow gaps and interdental spaces. The ductile cover comprising the protective tip ensures that the interdental spaces are cleaned without damaging the gingival tissues. The ductile cover envelops the sharp point created by the twisted wire in the spine, eliminating the risk of sensitivity, pain or injury to the user or unnecessary scratching and damaging gingival tissue in the mouth. This protective tip comprising the ductile cover ensures safe usage at any angle of cleaning and insertion in the interdental spaces.

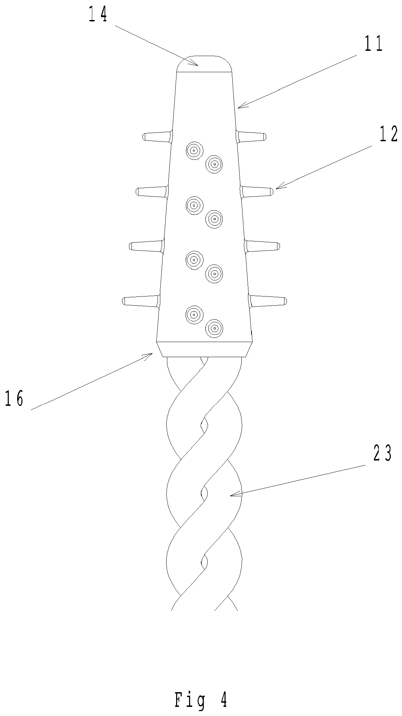

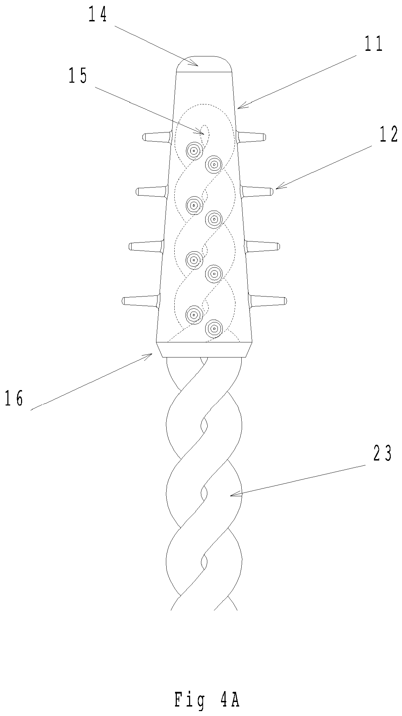

Fig. 4 shows the side view of the protective tip 10 in an embodiment. The protective tip comprising the ductile cover is dome shaped at the closed end 14 and chamfer shaped at the end 16 closest to the bristles, forming its shape during the injection molding process. The chamfer shape assists in guiding the tipped end of the brush from out between the teeth as the brush is removed from between the teeth and protects the tip from catching on any of the tooth surfaces.

Fig. 4A shows the side view of the protective tip 10 with the end of the twisted wire folded in a loop 15 in an embodiment. The function of the loop is to assist where a cohesive bond between the ductile cover and the twisted wire may fail. The loop contains the cooled and hardened tip material locked in place that will ensure the tip does not easily remove from the twisted wire.

The ductile cover comprising the protective tip 10 may be made from any of the materials selected from the group consisting of Thermal Plastic Elastomer (TPE), Thermal Plastic Urethane (TPU), Thermal Plastic Rubber (TPR), silicone or blended polymers. Preferably the cover is made from TPE. The protrusions 12 covering the ductile cover are made from elastomeric material selected from the group consisting of Thermal Plastic Elastomer (TPE), Thermal Plastic Urethane (TPU), Thermal Plastic Rubber (TPR), silicone or blended polymers such as polypropylene and Vistamaxx^{™} combination.

Interdental brushes are available in a variety of different sizes dependent on the needs of the user. An international standard (ISO - International Organization for Standardization) developed for "Passage Hole" sizes helps the user identify the size brush that best fits the gaps between the users' teeth. The dimensions of the protective tip depends upon the size of the twisted wire and the passage hole size the particular brush is targeted to accommodate. The length of the tip targets around 2 to 8 mm which allows for the tip "lead-in" length to be approximately one-third the depth on a normal molar. The compressed width of the tip can range between 0.7 mm to 1.8 mm dependent on the targeted passage hole. The distance 25 between the protective tip and the first row of bristles may be 5 mm or less, preferably 3 mm or less.

The spine of twisted wire 23 may be coated or uncoated. The spine is coated with a material selected from the group consisting of nylon, urethane or an adhesive coating. The adhesive coating may be any coating selected from the group consisting of cyanoacrylate, Hot Melt Adhesive (HMA), epoxies, methacrylate, UV curable adhesives, thixotropic adhesives, anaerobic adhesives or any adhesive approved for medical device products generally known in the art.

The spine of the twisted wire 23 has various rows of bristles 24 spaced on its body that are radially aligned, projecting and anchored in the twisted wires of the body. In one embodiment the said bristles taper towards the head making an inverse conical shaped interdental cleaner. In another embodiment the said bristles are projected in uniform length making a cylindrical structure.

The bristles 24 are made from a class of polyamides such as nylon or from polybutylenes. The proximal end of the brush is devoid of filaments or bristles and ends in a protective tip 10 comprising a ductile cover 11 having a plurality of centering ribs 13 and a plurality of protrusions 12 the said ductile cover being dome shaped at closed end 14 and chamfer shaped 16 at the bristle end.

The centering ribs facilitate clutching of the said twisted wire in place during the formation of the protective tip. A series of pins in the mold can also be used to hold the twisted wire in place during the molding processing. These pins would be part of the mold cavities and would touch and hold the twisted wire in place as the mold closes around the wire. These pins can be used in conjunction with the centering ribs or as a centering device thus eliminating the need for the centering ribs.

An additional adhesive coating may be required over the wire to create a stronger bond between the twisted wire and the cover. The adhesive coating may be coating selected from the group consisting of approved adhesives for use in medical devices generally known in the art. The adhesive should provide an adhesive or cohesive bond between the adhesive and the twisted wire and allow for a cohesive bond between the adhesive and the tip material. Certain types of Cyanoacrylate are very suitable for this type of application. Other materials are also available suitable, but typically to a lesser effect include HMA, epoxies, methacrylate, UV curable adhesives, thixotropic adhesives, anaerobic adhesives and possible other approved adhesives for medical devices.

The brush portion 21 of the interdental cleaner 20 projects from one end of a handle 22, the said projection is permanent or detachable. The handle of the said cleaner is made from various plastic materials including but not limited to, polypropylene, thermal plastic elastomers, low and high density polyethylene and other similar materials that provides the required grip for the usage of the present cleaner. The said handle can be fabricated in various shapes and sizes to accommodate the needs of the user i.e. a short grip comes handy for travelling while a longer grip with replaceable spine with bristles and protective head is practice for daily needs.

In one embodiment the present invention the handle is connected to an electromotor for automated cleaning.

In another embodiment the present invention relates to the process of fabricating the said interdental brush with a protective tip. The process includes the steps of manufacturing the twisted wire brush with a section at the tip of the brush void of any bristles followed by inserting the twisted wire brush void of bristles at the tip into an injection molding die where the cover is molded over the wire area void of bristles. The cover is molded onto the twisted wire brush with a plurality of protrusions. An adhesive coating can be applied to the wire to create an area for bonding the cover more securely during the injection molding process. The adhesive coating may be coating selected from the group consisting of approved adhesives for use in medical devices generally known in the art. The adhesive should provide an adhesive or cohesive bond between the adhesive and the twisted wire and allow for a cohesive bond between the adhesive and the tip material. Certain types of Cyanoacrylate are very suitable for this type of application. Other materials are also available suitable, but typically to a lesser effect include HMA, HMA, epoxies, methacrylate, UV curable adhesives, thixotropic adhesives, anaerobic adhesives and possible other approved adhesives for medical devices.

In another embodiment a loop 15 as shown in Fig. 4A is created at the fold of the twisted wire. This loop creates a passage hole for the material of the tip to flow through and once that material cools and hardens it creates a mechanical lock holding the tip material to the wire. The function of the loop is to assist where a cohesive bond may fail, the loop with the tip material locked in place will ensure the tip does not easily remove from the twisted wire.

The main advantages associated with the present brush are as under:
- Compact and easy to carry.
- Safer as it avoids sensitivity, pain or damage to gingival tissues
- Provides complete cleaning of the interdental spaces
- Light weight & effortless cleaning of the oral cavity
- Cost effective cleaning cleaner.
- Provides a "Lead-in" to easily guide the interdental brush between the teeth.
- Provides a protective element to insulate the metal wire and avoid galvanic shock with the user.
- Provides a safe, gentle material that will resist damaging dental implant posts.
- Provides a gentle but effective cleaning mechanism for removing debris caught under dental bridges.
- Provides a safe method of cleaning around orthodontic brackets and under orthodontic bridge wire that does not jeopardize the connection between the bracket and the wire.

An interdental brush with a protective tip as described above. The invention is capable of other embodiments and of being practiced and carried out in other ways without departing from its scope. The phrases and terminology used herein are for the purpose of description and may not be construed as being limiting. Furthermore, the foregoing description of the embodiments and the best mode of practicing are provided for the purpose of illustration only and not for the purpose of limitation, the invention being identified in the claims.

## Claims

1. An interdental brush (21) comprising
a spine of twisted wire (23),
bristles (24) projecting from the spine of the twisted wire,
a protective tip (10) at an end of the twisted wire above the said bristles wherein
the protective tip comprises a ductile cover (11) enveloping at the end of the twisted wire, molded and attached to the end of the wire and centered around the end of the wire;
**characterized in that** said ductile cover has a plurality of protrusions (12) is dome shaped at a closed end (14) and chamfer shaped at the bristle end (16).

2. The interdental brush as claimed in claim 1 wherein the protective tip is centered around the end of the twisted wire with a plurality of centering ribs (13).

3. The interdental brush as claimed in claim 1 wherein the protective tip is centered around the end of the twisted wire via a set of pins.

4. The interdental brush as claimed in claim 1, wherein the said protective tip has a length in the range of 2 to 8 mm targeting a lead in of at least one third of the depth of a tooth.

5. The interdental brush as claimed in claim 1 wherein the distance between the protective tip and the bristles is 5 mm or less, preferably 3 mm or less.

6. The interdental brush as claimed in claim 1 wherein a loop (15) is created at a fold of the twisted wire.

7. The interdental brush as claimed in claim 1, wherein the said protective tip is made from the material selected from the group consisting of Thermal Plastic Elastomer (TPE), Thermal Plastic Urethanes TPU), Thermal Plastic Rubber (TPR), silicone or blended polymers.

8. The interdental brush as claimed in claim 1, wherein the spine of twisted wire is coated or uncoated.

9. The interdental brush as claimed in claim 8, wherein the spine of twisted wire is coated with the material selected from the group consisting of nylon, urethane or an adhesive coating.

10. The interdental brush as claimed in claim 9, wherein the said adhesive coating is selected from the group consisting of cyanoacrylate, Hot Melt Adhesive, epoxies, methacrylate, UV curable adhesives, thixotropic adhesives, anaerobic adhesives or any other adhesive approved for use in medical devices.

11. The interdental brush as claimed in claim 1, wherein the said projecting bristles are radially aligned.

12. The interdental brush as claimed in claim 11, wherein the said projecting bristles are made of polyamides such as nylon or of polybutylenes.

13. The interdental brush as claimed in claim 11, wherein the said projecting bristles continuously taper towards the head forming a conical cleaner.

14. The interdental brush as claimed in claim 11, wherein the said projecting bristles are uniform forming a cylindrical cleaner.

15. The interdental brush as claimed in claim 1, wherein the spine of twisted wire is attached to a handle.

16. The interdental brush as claimed in claim 15, wherein the said handle is fabricated with material selected from polypropylene, thermal plastic elastomers, low and high density polyethylene.

17. The interdental brush as claimed in claim 1 wherein the protective tip is coupled to the brush to receive between teeth and interdental portions of gums facilitating cleaning of interdental spaces without damaging the tissue.

18. A process of fabricating an interdental brush according to any of claims 1-17 comprising a protective tip (10) comprising a ductile cover (11) having a plurality of protrusions (12) comprising the steps of:
manufacturing a twisted wire brush with a section at a tip of the brush void of any bristles;
inserting the twisted wire brush void of bristles at the tip into an injection molding die where the ductile cover is molded over the wire area void of bristles;
molding the ductile cover having protrusions onto the twisted wire brush.

19. The process as claimed in claim 18 wherein an adhesive coating is applied to the twisted wire on the area void of bristles.

20. The process as claimed in claim 19 wherein the said adhesive coating acts as a bonding surface and creates an area for bonding the ductile cover more securely during the injection molding process.

21. The process as claimed in claim 18 wherein the said protective tip is centered around the end of the twisted wire with a plurality of centering ribs.

22. The process as claimed in claim 18 wherein the said protective tip is centered around the end of the twisted wire via a set of pins.

23. The process as claimed in claim 18 wherein a loop (15) is created at the fold of the twisted wire.

24. The process as claimed in claim 23 wherein the said loop creates a passage hole for the material of the protective tip to flow through.

25. The process as claimed in claims 23 or 24 wherein the said material cools and hardens to create a mechanical lock holding the protective tip material to the wire.

## Patentansprüche

1. Interdentalbürste (21), umfassend
einen Dorn aus verdrilltem Draht (23),
Borsten (24), die aus dem Dorn des verdrillten Drahtes hervorstehen, eine Schutzspitze (10) an einem Ende des verdrillten Drahtes oberhalb der Borsten, wobei
die Schutzspitze eine biegsame Abdeckung (11) umfasst, die das Ende des verdrillten Drahts umhüllt, die an dem Ende des Drahts angeformt und befestigt ist, und die um das Ende des Drahts herum zentriert ist;
**dadurch gekennzeichnet, dass** die biegsame Abdeckung eine Vielzahl von Vorsprüngen (12) aufweist, an einem geschlossenen Ende (14) kuppelförmig und am Borstenende (16) abgeschrägt ist.

2. Interdentalbürste gemäß Anspruch 1, wobei die Schutzspitze mit einer Vielzahl von Zentrierrippen (13) um das Ende des verdrillten Drahts zentriert ist.

3. Interdentalbürste gemäß Anspruch 1, wobei die Schutzspitze über einen Satz von Stiften um das Ende des verdrillten Drahtes herum zentriert ist.

4. Interdentalbürste gemäß Anspruch 1, wobei die Schutzspitze eine Länge im Bereich von 2 bis 8 mm aufweist, die auf eine Einführung von mindestens einem Drittel der Tiefe eines Zahns abzielt.

5. Interdentalbürste gemäß Anspruch 1, wobei der Abstand zwischen der Schutzspitze und den Borsten 5 mm oder weniger, vorzugsweise 3 mm oder weniger, beträgt.

6. Interdentalbürste gemäß Anspruch 1, wobei an einer Falte des verdrillten Drahtes eine Schleife (15) erzeugt wird.

7. Interdentalbürste gemäß Anspruch 1, wobei die Schutzspitze aus dem Material hergestellt ist, das aus der Gruppe ausgewählt ist, die aus thermoplastischem Elastomer (TPE), thermoplastischen Urethanen (TPU), thermoplastischem Gummi (TPR), Silikon oder gemischten Polymeren besteht.

8. Interdentalbürste gemäß Anspruch 1, wobei der Dorn aus verdrilltem Draht beschichtet oder unbeschichtet ist.

9. Interdentalbürste gemäß Anspruch 8, wobei der Dorn aus verdrilltem Draht mit dem Material beschichtet ist, das aus der Gruppe ausgewählt ist, die aus Nylon, Urethan oder einer Klebstoffbeschichtung besteht.

10. Interdentalbürste gemäß Anspruch 9, wobei die Klebstoffbeschichtung ausgewählt ist aus der Gruppe bestehend aus Cyanoacrylat, Schmelzklebstoff, Epoxiden, Methacrylat, UV-härtbaren Klebstoffen, thixotropen Klebstoffen, anaeroben Klebstoffen oder jedem anderen Klebstoff, der zur Verwendung in medizinischen Geräten zugelassen ist.

11. Interdentalbürste gemäß Anspruch 1, wobei die hervorstehenden Borsten radial ausgerichtet sind.

12. Interdentalbürste gemäß Anspruch 11, wobei die hervorstehenden Borsten aus Polyamiden wie Nylon oder Polybutylenen hergestellt sind.

13. Interdentalbürste gemäß Anspruch 11, wobei sich die hervorstehenden Borsten zum Kopf hin kontinuierlich verjüngen und einen konischen Reiniger bilden.

14. Interdentalbürste gemäß Anspruch 11, wobei die hervorstehenden Borsten gleichförmig sind und einen zylindrischen Reiniger ausbilden.

15. Interdentalbürste gemäß Anspruch 1, wobei der Dorn aus verdrilltem Draht an einem Griff befestigt ist.

16. Interdentalbürste gemäß Anspruch 15, wobei der Griff mit einem Material hergestellt ist, das ausgewählt ist aus Polypropylen, thermoplastischen Elastomeren, Polyethylen niedriger und hoher Dichte.

17. Interdentalbürste gemäß Anspruch 1, wobei die Schutzspitze mit der Bürste gekoppelt ist, um zwischen den Zähnen und interdentalen Bereichen des Zahnfleisches aufzunehmen, was das Reinigen von Zahnzwischenräumen erleichtert, ohne das Gewebe zu beschädigen.

18. Verfahren zur Herstellung einer Interdentalbürste gemäß einem der Ansprüche 1-17 umfassend eine Schutzspitze (10) umfassend eine biegsame Abdeckung (11) aufweisend eine Vielzahl von Vorsprüngen (12), umfassend die folgenden Schritte:
Herstellen der Bürste mit verdrilltem Draht mit einem Abschnitt an der Spitze der Bürste ohne jegliche Borsten;
Einsetzen der Bürste mit verdrilltem Draht ohne Borsten an der Spitze in ein Spritzgusswerkzeug, wo die biegsame Abdeckung über den Drahtbereich ohne Borsten angeformt wird;
Formen der Vorsprünge aufweisenden biegsamen Abdeckung auf die Bürste mit verdrilltem Draht.

19. Verfahren gemäß Anspruch 18, wobei eine Klebstoffbeschichtung auf den verdrillten Draht auf dem Bereich ohne Borsten aufgebracht wird.

20. Verfahren gemäß Anspruch 19, wobei die Klebstoffbeschichtung als Verbindungsfläche wirkt und einen Bereich zum sichereren Verbinden der biegsamen Abdeckung während des Spritzgussverfahrens erzeugt.

21. Verfahren gemäß Anspruch 18, wobei die Schutzspitze mit einer Vielzahl von Zentrierrippen um das Ende des verdrillten Drahts zentriert wird.

22. Verfahren gemäß Anspruch 18, wobei die Schutzspitze über einen Satz von Stiften um das Ende des verdrillten Drahtes herum zentriert wird.

23. Verfahren gemäß Anspruch 18, wobei eine Schleife (15) an der Falte des verdrillten Drahtes erzeugt wird.

24. Verfahren gemäß Anspruch 23, wobei die Schleife ein Durchgangsloch erzeugt, durch das das Material der Schutzspitze fließen kann.

25. Verfahren gemäß Anspruch 23 oder 24, wobei das Material abkühlt und aushärtet, um eine mechanische Verriegelung zu erzeugen, die das Schutzspitzenmaterial an dem Draht hält.

## Revendications

1. Brosse interdentaire (21) comprenant
une colonne de fil torsadé (23),
des poils (24) saillants de la colonne de fil torsadé,
une pointe de protection (10) à une extrémité du fil torsadé au-dessus desdites soies dans laquelle
la pointe de protection comprend une couverture ductile (11) enveloppante à l'extrémité du fil torsadé, moulée et fixée à l'extrémité du fil et centrée autour de l'extrémité du fil ;
**caractérisée en ce que** ladite couverture ductile a une pluralité de saillies (12), est en forme de dôme à une extrémité fermée (14) et est en forme de chanfrein à l'extrémité du poil (16).

2. Brosse interdentaire selon la revendication 1, dans laquelle la pointe de protection est centrée autour de l'extrémité du fil torsadé avec une pluralité de nervures de centrage (13).

3. Brosse interdentaire selon la revendication 1, dans laquelle la pointe de protection est centrée autour de l'extrémité du fil torsadé via un jeu de broches.

4. Brosse interdentaire selon la revendication 1, dans laquelle ladite pointe de protection a une longueur comprise entre 2 et 8 mm et en ciblant une entrée d'au moins un tiers de la profondeur d'une dent.

5. Brosse interdentaire selon la revendication 1 dans laquelle la distance entre la pointe de protection et les poils est de 5 mm ou moins, de préférence de 3 mm ou moins.

6. Brosse interdentaire selon la revendication 1 dans laquelle une boucle (15) est créée à un pli du fil torsadé.

7. Brosse interdentaire selon la revendication 1, dans laquelle ladite pointe de protection est faite à partir du matériau choisi dans le groupe constitué de Élastomère Thermoplastique (TPE), Uréthane Thermoplastique (TPU), Caoutchouc Thermoplastique (TPR), silicone ou polymères mélangés.

8. Brosse interdentaire selon la revendication 1, dans laquelle la colonne de fil torsadé est revêtue ou non revêtue.

9. Brosse interdentaire selon la revendication 8, dans laquelle la colonne de fil torsadé est revêtue avec le matériau choisi parmi le groupe constitué de nylon, uréthane ou un revêtement adhésif.

10. Brosse interdentaire selon la revendication 9, dans laquelle ledit revêtement adhésif est choisi parmi le groupe constitué de cyanoacrylate, adhésif thermofusible, époxydes, méthacrylate, adhésifs durcissables aux UV, adhésifs thixotropes, adhésifs anaérobies ou tout autre adhésif approuvé pour utilisation dans des dispositifs médicaux.

11. Brosse interdentaire selon la revendication 1, dans laquelle lesdits poils saillants sont alignés radialement.

12. Brosse interdentaire selon la revendication 11, dans laquelle lesdits poils saillants sont faits de polyamides tels que le nylon ou de polybutylènes.

13. Brosse interdentaire selon la revendication 11, dans laquelle lesdits poils saillants s'effilent continuellement vers la tête formant un nettoyant conique.

14. Brosse interdentaire selon la revendication 11, dans laquelle lesdits poils saillants sont uniformes formant un nettoyant cylindrique.

15. Brosse interdentaire selon la revendication 1, dans laquelle la colonne de fil torsadé est attachée à une poignée.

16. Brosse interdentaire selon la revendication 15, dans laquelle ladite poignée est fabriquée avec un matériau choisi à partir de polypropylène, élastomères thermoplastiques, polyéthylène de basse et haute densité.

17. Brosse interdentaire selon la revendication 1 dans laquelle la pointe de protection est couplée à la brosse pour recevoir entre des dents et des parties interdentaires des gencives facilitant le nettoyage des espaces interdentaires sans endommager le tissu.

18. Procédé de fabrication d'une brosse interdentaire selon l'une des revendications 1-17 comprenant une pointe de protection (10) comprenant une couverture ductile (11) ayant une pluralité de saillies (12) comprenant les étapes suivantes :
la fabrication d'une brosse à fil torsadé avec une section à l'extrémité de la brosse vide de poils ;
l'insertion de la brosse à fil torsadé vide de poils à l'extrémité dans une matrice de moulage par injection où la couverture ductile est moulée sur la zone de fil vide de poils ;
le moulage de la couverture ductile ayant des saillies sur la brosse de fil torsadé.

19. Procédé revendiqué selon la revendication 18 dans lequel un revêtement adhésif est appliqué sur le fil torsadé sur la zone vide de poils.

20. Procédé revendiqué selon la revendication 19 dans lequel ledit revêtement adhésif agit comme une surface de collage et crée une zone de collage plus robuste de la couverture ductile pendant le procédé de moulage par injection.

21. Procédé revendiqué selon la revendication 18 dans lequel ladite pointe de protection est centrée autour de l'extrémité du fil torsadé avec une pluralité de nervures de centrage.

22. Procédé revendiqué selon la revendication 18 dans lequel ladite pointe de protection est centrée autour de l'extrémité du fil torsadé via un jeu de broches.

23. Procédé revendiqué selon la revendication 18 dans lequel une boucle (15) est créée au pli du fil torsadé.

24. Procédé revendiqué selon la revendication 23 dans lequel ladite boucle crée un trou de passage pour que le matériau de la pointe de protection puisse passer.

25. Procédé revendiqué selon les revendications 23 ou 24 dans lequel ledit matériau refroidit et durcit pour créer un verrou mécanique qui retient le matériau de la pointe de protection au fil.
